# EUROPÄISCHE PATENTSCHRIFT

(11) **EP 1 540 207 B1**
(45) Veröffentlichungstag und Bekanntmachung des Hinweises auf die Patenterteilung: **20.04.2011**
(21) Anmeldenummer: 03778266.1
(22) Anmeldetag: 28.08.2003
(51) Int. Cl.: F16H 25/22

(54) **KUGELGEWINDETRIEB UND VERFAHREN ZUM HERSTELLEN EINER SPINDELMUTTER EINES KUGELGEWINDETRIEBES**
BALL SCREW AND METHOD FOR PRODUCTION OF A BALL SCREW NUT FOR A BALL SCREW
VIS D'ENTRAINEMENT A BILLES ET PROCEDE DE FABRICATION D'UN ECROU DESTINE A UNE VIS D'ENTRAINEMENT A BILLES

(30) Priorität: 17.09.2002 DE 10243020
(43) Veröffentlichungstag der Anmeldung: 15.06.2005
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); BAUER, Rudolf, 91074 Herzogenaurach (DE); KELLER, Torsten, 91093 Hessdorf (DE)
(86) Internationale Anmeldenummer: PCT/EP2003/009508
(87) Internationale Veröffentlichungsnummer: WO 2004/027286

(56) Entgegenhaltungen:
- EP-A- 0 103 316
- EP-A- 0 985 470
- DE-A- 4 131 486
- DE-A- 10 062 982
- DE-A- 19 944 875
- FR-A- 2 204 271
- US-A- 4 274 297
- US-A- 6 116 109
- US-A1- 2002 026 844

## Beschreibung

Die vorliegende Erfindung betrifft ein Verfahren zum Herstellen einer Spindelmutter eines Kugelgewindetriebes und einen Kugelgewindetrieb.

Die DE 100 62 982 A wird als nächstliegender Stand der Technik angesehen.

Aus DE 199 44 875 A1 beispielsweise ist ein Kugelgewindetrieb bekannt, mit einer Spindel und einer diese umgebenden Mutter, sowie mit dazwischen angeordneten Kugeln, welche in einer an der äußeren Oberfläche der Spindel ausgebildeten Gewindenut und in einer entsprechenden, an der inneren Oberfläche der Mutter ausgebildeten Gewindenut abrollbar angeordnet sind. Ferner sind radiale Durchgangsöffnungen an der Mutter vorgesehen, in welche Umlenkstücke für die Rückführung der Kugeln jeweils von einem Auslaufende einer gemeinsamen Windung der Gewindenuten zu einem Einlaufende dieser Windung eingesetzt sind. Die Mutter ist als einstückige Hülse mit einem kreiszylindrischen Mantel ausgeführt und jedes eingesetzte Umlenkstück ist in der zugehörigen Durchgangsöffnung der Mutter vollständig innerhalb des Außenmantels angeordnet. Die Durchgangsöffnungen werden üblicherweise spangebend hergestellt. Bei diesem Verfahren können Grate am Rand der Durchgangsöffnung entstehen, die nicht nur störend sind, sondern die zusätzlich die einwandfreie Funktion des Kugelgewindetriebs beeinträchtigen. Insbesondere dort, wo der Rand der Durchgangsöffnung in die Gewindenut der Spindelmutter übergeht, kann ein Grat zu erheblichen Problemen führen. Wenn das Umlenkstück in die Durchgangsöffnung eingesetzt ist und die abwälzende Kugel aus der Gewindenut der Spindelmutter in den Umlenkkanal des Umlenkstücks hineinrollt bzw. von nachfolgenden Kugeln hineingedrückt wird, kann diese an dem Grat verkanten und den Kugelumlauf blockieren.

Aufgabe der vorliegenden Erfindung ist es, ein Verfahren zum Herstellen einer Spindelmutter anzugeben, bei der dieser Nachteil vermieden ist.

Erfindungsgemäß wird diese Aufgabe dadurch gelöst, dass ein innerhalb der Spindelmutter angeordneter Lochstempel von radial innen nach radial außen durch den Mantel der Spindelmutter hindurch die Durchgangsöffnung ausstanzt. Das Ausstanzen von innen nach außen bietet entscheidende Vorteile. Zum einen nutzt man den bei Stanzvorgängen sich einstellenden Effekt eines Stanzeinzuges. Dieser Stanzeinzug stellt sich am Werkstück an dessen dem Lochstempel zugewandten Oberfläche ein. Am fertigen Werkstück macht sich dieser Stanzeinzug als schwache Rundung an der Stanzöffnung bemerkbar. Bei dem erfindungsgemäßen Verfahren wird der Stanzeinzug in besonders günstiger Weise genutzt, damit dieser am radial innenliegenden Rand der Durchgangsöffnung ausgebildet wird. Das bedeutet, dass sich insbesondere der Rand im Übergang von der Durchgangsöffnung zu der Gewindenut der Spindelmutter als leichte konvexe Rundung darstellt. Das wiederum hatte zur Folge, dass sichergestellt ist, dass kein unerwünschter Grat im Bereich des Kugelumlaufs, insbesondere im Übergang von der Durchgangsöffnung zu der Gewindenut ausgebildet sein kann.

Ein weiterer Vorteil des erfindungsgemäßen Verfahrens besteht darin, dass der Schnittanteil des Stanzvorganges radial innenliegend an der Wandung der Durchgangsöffnung ausgebildet ist. Der hochgenau am Werkstück sich abzeichnende Schnittanteil ermöglicht eine exakte Dimensionierung der auszustanzenden Durchgangsöffnung. Das bedeutet, dass das Umlenkstück einwandfrei positioniert in die Durchgangsöffnung und zwar radial innenliegend eingesetzt werden kann. Der Ausrissanteil des Stanzvorganges ist beim Stanzen vorliegend radial außen an der außenliegenden Seite der Spindelmutter ausgebildet, und stellt sich als leicht konische Erweiterung dar. Auch dieser sich einstellende Effekt kann vorteilhaft dazu genutzt werden, dass aufgrund der konischen Erweiterung das Umlenkstück von radial außen problemlos in die Durchgangsöffnung eingesetzt werden kann.

Vorzugsweise umfasst das Stanzwerkzeug neben dem Lochstempel einen Gewindedorn, dessen Gewindeprofil als Negativprofil zu einem eine Gewindenut für Kugeln bildenden Innengewinde der Spindelmutter ausgebildet ist, wobei der Lochstempel in dem Gewindedorn radial verschieblich angeordnet ist, und wobei die Spindelmutter auf dem Gewindedorn angeordnet wird, wonach der Lochstempel radial auswärts aus dem Gewindedorn bewegt wird. Dadurch, dass vor dem Ausstanzvorgang die Spindelmutter auf dem Gewindedorn angeordnet ist, lässt sich eine exakte Positionierung des Lochstempels gegenüber der Spindelmutter ermöglichen. Das bedeutet, auch wenn mehrere in dem Gewindedorn vorgesehene Lochstempel eingesetzt werden, werden nach der Positionierung der Spindelmutter auf dem Gewindedorn die Durchgangsöffnungen an exakt den vorgesehenen Stellen gestanzt.

Bei einem erfindungsgemäßen Kugelgewindetrieb weist der am Innenumfang der Spindelmutter liegende Rand der Durchgangsöffnung eine konvexe Rundung auf. Wie eingangs bereits ausführlich beschrieben wurde, ist diese konvexe Rundung das Ergebnis eines Stanzvorganges von radial innen nach radial außen, wobei der Stanzeinzug diese erfindungsgemäße Rundung bedingt. Jedoch mögen auch andere Verfahren vorgesehen werden, mit der diese konvexe Rundung erzielt wird. Erfindungsgemäß ist mit dieser konvexen Rundung jedenfalls sichergestellt, dass kein unerwünschter Grat im Übergangsbereich von der Gewindenut der Spindelmutter und der Durchgangsöffnung gebildet sein kann.

Nachstehend wird die Erfindung anhand eines in insgesamt fünf Figuren dargestellten Ausführungsbeispieles näher erläutert.

Es zeigen:
- Figur 1: eine perspektivische Darstellung einer erfindungsgemäßen Spindelmutter,
- Figur 2: einen Querschnitt durch die erfindungsgemäße Spindel- mutter aus Figur 1,
- Figur 3: eine Detailvergrößerung der erfindungsgemäßen Spindel- mutter aus Figur 2,
- Figur 4: ein Verfahren zum Herstellen der erfindungsgemäßen Spindelmutter aus den Figuren 1 bis 3 und
- Figur 5: einen erfindungsgemäßen Kugelgewindetrieb in verein- fachter Darstellung.

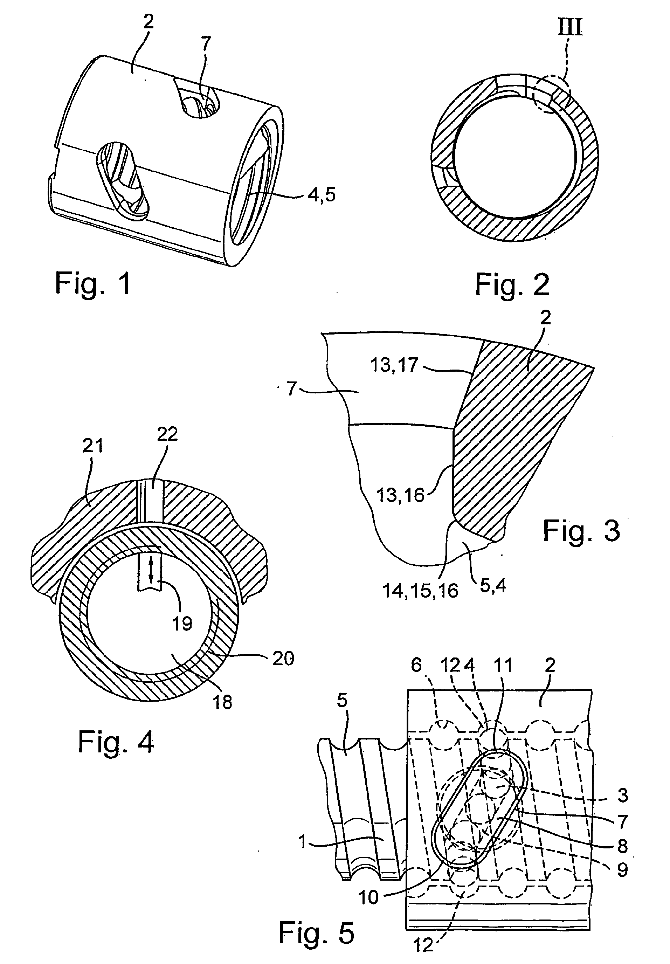

Der in Figur 4 abgebildete erfindungsgemäße Kugelgewindetrieb umfasst eine auf einer Spindel 1 angeordnete Spindelmutter 2 sowie Kugeln 3, die hier lediglich gestrichelt dargestellt sind. Die Kugeln 3 können an einer Gewindebahn 4 abrollen. Die Gewindebahn 4 umfasst eine an der Spindel 1 ausgebildete Gewindenut 5 und eine an der Spindelmutter 2 ausgebildete Gewindenut 6. Die Spindelmutter 1 ist mit mehreren über den Umfang verteilt angeordneten Aufnahmen 7 zur Aufnahme von Umlenkstücken 8 versehen. Jedes Umlenkstück 8 umfasst einen Umlenkkanal 9 für die Rückführung der Kugeln 3 jeweils von einem Auslaufende 10 hin zu einem Einlaufende 11 mindestens einer gemeinsamen Windung 12 der Gewindebahn 4.

Figur 1 zeigt als Einzelteil eine erfindungsgemäße Spindelmutter 2 mit von radial innen nach radial außen ausgestanzten Durchgangsöffnungen 7.

Die geschnittene Durchgangsöffnung 7 ist auch der Figur 2 zu entnehmen.

Figur 3 zeigt nun in vergrößerter Darstellung die Wandung 13 der Durchgangsöffnung 7. Der am Innenumfang der Spindelmutter 2 liegende Rand 14 der Durchgangsöffnung 7 weist im Übergang zur Gewindebahn 4 und insbesondere zur Gewindenut 5 der Spindelmutter 2 eine konvexe Rundung 15 auf. Der an den Rand 14 anschließende Teil 16 der Wandung 13 ist zylindrisch oder langlochförmig mit zueinander parallelen Wandabschnitten ausgebildet. Der daran anschließende Teil 17 der Wandung 13 ist leicht konisch erweitert.

Figur 4 zeigt ein Verfahren zum Herstellen der oben beschriebenen erfindungsgemäßen Spindelmutter 2 und zwar insbesondere die Herstellung der Durchgangsöffnung 7, wie sie in der Figur 3 stark vergrößert dargestellt ist.

Gemäß Figur 4 ist ein Stanzwerkzeug vorgesehen, das einen Gewindedorn 18 und einen oder mehrere in dem Gewindedorn 18 angeordnete Lochstempel 19 umfasst. Der Gewindedorn 18 weist ein Gewindeprofil 20 auf, das als Negativprofil zu der Gewindenut 5 der Spindelmutter 2 ausgebildet ist. Der Lochstempel 19 ist in dem Gewindedorn 18 radial verschieblich angeordnet. Ferner umfasst das Stanzwerkzeug eine Matrize 21, die mit einer Öffnung 22 zur Aufnahme von ausgestanztem Material der Spindelmutter 2 und den Lochstempel 19 vorgesehen ist.

Zum Herstellen der Durchgangsöffnung 7 werden der oder die Lochstempel 19 radial auswärts verlagert, wobei Material aus der Spindelmutter 2 ausgestanzt wird. Der sich üblicherweise bei Stanzvorgängen einstellende Stanzeinzug am Werkstück stellt sich hier erfindungsgemäß als die weiter oben bereits beschriebene konvexe Rundung 15 am inneren Rand 14 der Durchgangsöffnung 7 dar. Ebenfalls als Folge des Stanzvorganges von radial innen nach radial außen schließt der Schnittanteil den radial innenliegenden Rand an, der weiter oben bereits als Teil 16 der Wandung 13 bezeichnet wurde. Daran anschließend ist der ebenfalls als Folge des Stanzvorganges ausgebildete Ausrissanteil erkennbar, der weiter oben bereits als konischer Teil 17 der Wandung 13 bezeichnet wurde.

Die konvexe Rundung 15 hat den Vorteil, dass an der Gewindebahn 4 bzw. der Gewindenut 5 der Spindelmutter 2 im Übergang zu der Durchgangsöffnung 7 kein unerwünschter Grat gebildet ist. Der Teil 16 der Wandung 13 ist vorliegend der Schnittanteil des Stanzvorganges. Dieser Schnittanteil kann hochgenau gefertigt werden, so dass das Umlenkstück 8 exakt in die Durchgangsöffnung 7 eingesetzt werden kann. Die konische Erweiterung der Durchgangsöffnung 7 als Folge des konischen Teils 17 der Wandung 13 ermöglicht ein problemloses Einsetzen des Umlenkstückes 8 von radial außen.

### Bezugszahlen

- 1: Spindel
- 2: Spindelmutter
- 3: Kugel
- 4: Gewindebahn
- 5: Gewindenut
- 6: Gewindenut
- 7: Durchgangsöffnung
- 8: Umlenkstück
- 9: Umlenkkanal
- 10: Auslaufende
- 11: Einlaufende
- 12: Wandung
- 13: Wandung
- 14: Rand
- 15: konvexe Rundung
- 16: Teil der Wandung
- 17: Teil der Wandung
- 18: Gewindedorn
- 19: Lochstempel
- 20: Gewindeprofil
- 21: Matrize

## Patentansprüche

1. Verfahren zum Herstellen einer Spindelmutter (2) eines Kugelgewindetriebes, die an ihrem Umfang mit wenigstens einer Durchgangsöffnung (7) zur Aufnahme eines Umlenkstücks (8) versehen ist und an der eine Gewindenut (6) ausgebidlet ist, **dadurch gekennzeichnet, dass** ein innerhalb der Spindelmutter (2) angeordneter Lochstempel (19) von radial innen nach radial außen durch den Mantel der Spindelmutter (2) hindurch die Durchgangsöffnung (7) ausstanzt, wobei ein am Innenumfang der Spindelmutter (2) liegender Rand (14) der Durchgangsöffnung (7) im Übergang zu der Gewindenut (6) eine konvexe Rundung (15) als Ergebnis des Stanzvorganges aufweist.

2. Verfahren nach Anspruch 1, bei dem ein den Lochstempel (19) umfassendes Stanzwerkzeug ferner einen Gewindedorn (18) umfasst, dessen Gewindeprofil (20) als Negativprofil zu einem eine Gewindenut (6) für Kugeln (3) bildenden Innengewinde der Spindelmutter (2) ausgebildet ist, wobei der Lochstempel (19) in dem Gewindedorn (18) radial verschieblich angeordnet ist, wobei die Spindelmutter (2) auf dem Gewindedorn (18) angeordnet wird, wonach der Lochstempel (19) radial auswärts aus dem Gewindedorn (18) bewegt wird.

3. Verfahren nach Anspruch 1, bei dem der Schnittanteil (16) des Stanzvorganges radial innenliegend an der Wandung (13) der Durchgangsöffnung (7) ausgebildet ist.

4. Verfahren nach Anspruch 1, bei dem ein Ausrissanteil (17) des Stanzvorganges radial außenliegend an der Wandung (13) der Durchgangsöffnung (7) ausgebildet ist.

5. Verfahren nach Anspruch 1, bei dem der Stanzeinzug (15) am radial innen liegenden Rand der Durchgangsöffnung (7) ausgebildet wird.

6. Kugelgewindetrieb, mit einer auf einer Spindel (1) angeordneten Spindelmutter (2), sowie mit Kugeln (3), die in einer Gewindebahn (4) abrollbar angeordnet sind, wobei die Gewindebahn (4) durch eine an der Spindel (1) ausgebildete Gewindenut (5) und durch eine an der Spindelmutter (2) ausgebildete Gewindenut (6) gebildet ist, und mit wenigstens einem in einer Durchgangsöffnung (7) der Spindelmutter (2) angeordneten Umlenkstück (8), welches einen Umlenkkanal (9) für die Rückführung der Kugeln (3) jeweils von einem Auslaufende (10) hin zu einem Einlaufende (11) mindestens einer gemeinsamen Windung (12) der Gewindebahn (4) aufweist, **dadurch gekennzeichnet, dass** der am Innenumfang der Spindelmutter (2) liegende Rand (14) der Durchgangsöffnung (7) eine konvexe Rundung (15) aufweist, die im Übergang von der Durchgangsöffnung (7) zu der Gewindenut (6) der Spindelmutter (2) ausgebildet ist, wobei Material der Spindelmutter (2) unter Bildung der Rundung (15) von radial innen nach radial außen gezogen oder verdrängt ist.

## Claims

1. Method for producing a spindle nut (2) of a ball screw, which is provided on its circumference with at least one through-opening (7) for receiving a deflecting piece (8) and on which a thread groove (6) is formed, **characterized in that** a hole punch (19) which is arranged within the spindle nut (2) punches out the through-opening (7) from radially inward to radially outward through the casing of the spindle nut (2), a rim (14) of the through-opening (7) lying on the inner circumference of the spindle nut (2) having a convex rounding (15) at the transition to the thread groove (6) as a result of the punching operation.

2. Method according to Claim 1, in which a punching tool comprising the hole punch (19) also comprises a threaded spike (18), the thread profile (20) of which is formed as a negative profile in relation to an inner thread of the spindle nut (2) forming a thread groove (6) for balls (3), the hole punch (19) being arranged radially displaceably in the threaded spike (18), and the spindle nut (2) being arranged on the threaded spike (18), whereupon the hole punch (19) is moved radially outward out of the threaded spike (18).

3. Method according to Claim 1, in which the cut portion (16) of the punching operation is formed radially on the inside of the wall (13) of the through-opening (7).

4. Method according to Claim 1, in which a torn-out portion (17) of the punching operation is formed radially on the outside of the wall (13) of the through-opening (7).

5. Method according to Claim 1, in which the punching draw-in (15) is formed on the radially inner rim of the through-opening (7).

6. Ball screw with a spindle nut (2) arranged on a spindle (1), and also with balls (3), which are arranged in such a way that they can roll in a thread path (4), the thread path (4) being formed by a thread groove (5) formed on the spindle (1) and by a thread groove (6) formed on the spindle nut (2), and with at least one deflecting piece (8), which is arranged in a through-opening (7) of the spindle nut (2) and has a deflecting channel (9) for the return of the balls (3) respectively from a run-out end (10) to a run-in end (11) of at least one common turn (12) of the thread path (4), **characterized in that** the rim (14) of the through-opening (7) lying on the inner circumference of the spindle nut (2) has a convex rounding (15) which is formed at the transition from the through-opening (7) to the thread groove (6) of the spindle nut (2), material of the spindle nut (2) being drawn or forced from radially inward to radially outward, thereby forming the rounding (15).

## Revendications

1. Procédé de fabrication d'un écrou de broche (2) d'une vis à billes, qui est pourvu sur sa périphérie d'au moins une ouverture de passage (7) pour recevoir une partie de renvoi (8) et sur lequel est réalisée une rainure filetée (6), **caractérisé en ce qu'**un poinçon (19) disposé à l'intérieur de l'écrou de broche (2) estampe, radialement de l'intérieur vers radialement vers l'extérieur à travers l'enveloppe de l'écrou de broche (2), l'ouverture de passage (7), un bord (14) de l'ouverture de passage (7) situé sur la périphérie intérieure de l'écrou de broche (2) au niveau de la transition à la rainure filetée (6) présentant un arrondi convexe (15), résultant de l'opération d'estampage.

2. Procédé selon la revendication 1, dans lequel un outil d'estampage comprenant le poinçon (19) comprend en outre un mandrin fileté (18), dont le profil fileté (20) est réalisé sous forme de profil négatif par rapport à un filetage interne de l'écrou de broche (2) formant une rainure filetée (6) pour des billes (3), le poinçon (19) étant disposé de manière déplaçable radialement dans le mandrin fileté (18), l'écrou de broche (2) étant disposé sur le mandrin fileté (18), et le poinçon (19) étant ensuite déplacé radialement vers l'extérieur hors du mandrin fileté (18).

3. Procédé selon la revendication 1, dans lequel la proportion de coupe (16) de l'opération d'estampage est située radialement à l'intérieur sur la paroi (13) de l'ouverture de passage (7).

4. Procédé selon la revendication 1, dans lequel une proportion d'éclatement (17) de l'opération d'estampage est située radialement à l'extérieur sur la paroi (13) de l'ouverture de passage (7).

5. Procédé selon la revendication 1, dans lequel l'insert d'estampage (15) est réalisé sur le bord de l'ouverture de passage (7) situé radialement à l'intérieur.

6. vis à billes, comprenant un écrou de broche (2) disposé sur une broche (1), ainsi que des billes (3), qui sont disposées de manière à pouvoir rouler sur une piste filetée (4), la piste filetée (4) étant formée par une rainure filetée (5) réalisée sur la broche (1) et par une rainure filetée (6) réalisée sur l'écrou de broche (2), et comprenant au moins une partie de renvoi (8) disposée dans une ouverture de passage (7) de l'écrou de broche (2), qui présente un canal de renvoi (9) pour ramener les billes (3) à chaque fois depuis une extrémité de sortie (10) vers une extrémité d'entrée (11) d'au moins un enroulement commun (12) de la piste filetée (4), **caractérisée en ce que** le bord (14) de l'ouverture de passage (7) situé sur la périphérie intérieure de l'écrou de broche (2) présente un arrondi convexe (15), qui est réalisé au niveau de la transition de l'ouverture de passage (7) à la rainure filetée (6) de l'écrou de broche (2), du matériau de l'écrou de broche (2) étant tiré ou repoussé radialement de l'intérieur vers radialement vers l'extérieur en formant l'arrondi (15).
